# DEMANDE DE BREVET EUROPEEN

(11) **EP 1 262 697 A1**
(43) Date de publication de la demande: **04.12.2002**
(21) Numéro de dépôt: 01870112.8
(22) Date de dépôt: 30.05.2001
(51) Int. Cl.: F16K 1/42

(54) **Vanne pour liquides cryogéniques**

(71) Demandeur: Techspace Aero S.A., 4041 Herstal (BE)
(72) Inventeur: Damhaut, Luc, B-4050 Ninane (BE)
(74) Mandataire: Van Malderen, Joelle

(57) **Abrégé**

La présente invention se rapporte à un dispositif d'étanchéité pour vanne ou soupape à clapet à hélium superfluide, destiné à assurer l'étanchéité entre une zone froide (50) située en amont et une zone chaude (60) située en aval, comprenant un clapet (30), un joint (10) disposé sur ledit clapet (30), et un siège plan (20), caractérisé en ce que ledit dispositif comprend en outre une zone de stagnation (80), positionnée et conformée de façon telle qu'elle est capable de retenir une certaine quantité d'hélium liquide, quand la vanne est fermée.

## Description

### Objet de l'invention

La présente invention se rapporte à un dispositif d'étanchéité pour vanne ou soupape à clapet sur siège plan.

La présente invention se rapporte également à ladite vanne ou soupape à clapet sur siège plan muni dudit dispositif d'étanchéité.

Le domaine d'application de l'invention est celui des températures cryogéniques.

### Etat de la technique

Dans le domaine des vannes ou soupapes à clapet, il est connu que lorsqu'on réalise une étanchéité par contact plan, le lieu des points de portance ou section hydraulique sur laquelle se fait la séparation entre l'amont et l'aval du joint peut se situer à n'importe quelle valeur du diamètre de la section de contact.

Dans le domaine d'application des températures cryogéniques, et en particulier pour les vannes à hélium superfluide, on se trouve confronté au phénomène spécifique selon lequel de l'hélium se présentant sous une forme superfluide, c'est-à-dire à une température inférieure à 1,9 °K, se trouve à l'amont du dispositif d'étanchéité (appelé "zone froide"), tandis que de l'hélium à l'état gazeux, à une température supérieure à 5 °K, se trouve à l'aval du dispositif d'étanchéité (appelé "zone chaude") . On observe que dans ce cas de figure, un apport de chaleur par conduction peut être généré de la zone chaude vers la zone froide à travers la matière même qui constitue le siège d'étanchéité de la vanne, habituellement réalisé en acier inoxydable. Il en résulte que l'étanchéité de la vanne n'est pas parfaitement assurée.

### Buts de l'invention

La présente invention vise à fournir une vanne ou soupape à clapet sur siège plan ne présentant pas les inconvénients de l'état de la technique.

En particulier, la présente invention vise à proposer une solution qui permet d'empêcher l'apport de chaleur par conduction de la zone chaude vers la zone froide au sein d'une vanne pour hélium superfluide.

### Résume de l'invention

### Brève description des figures

La figure 1 représente une vue en coupe d'une vanne à clapet pour hélium superfluide selon l'état de la technique.

La figure 2 représente une vue en coupe d'une vanne à clapet pour hélium superfluide selon la présente invention.

### Description d'une forme d'exécution selon l'état de la technique

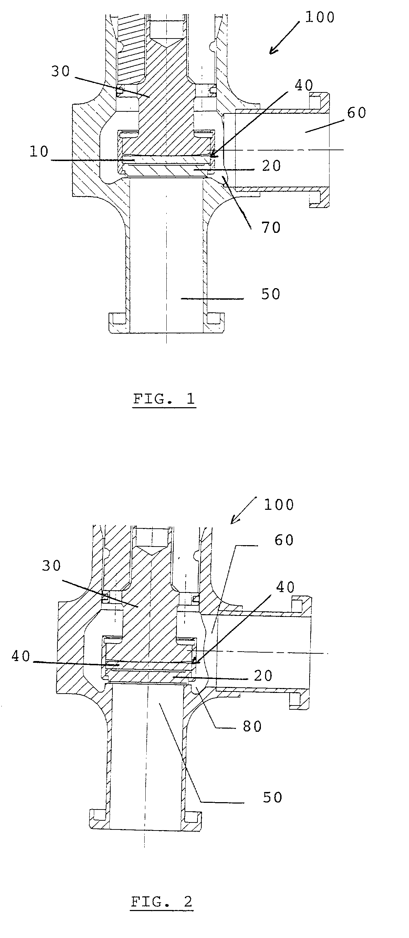

La figure 1 décrit selon l'état de la technique une vanne 100 ou soupape à clapet sur siège plan 20 en position fermée. Le dispositif d'étanchéité est constitué par le clapet 30 sur lequel est disposé un joint 10, éventuellement sous forme de lame, qui, lors de la fermeture de la vanne, se positionnera sur une zone de contact 40 sur le siège plan 20.

La partie amont de la vanne constitue la zone froide 50 dans laquelle l'hélium se présente à une température inférieure à 1,9 °K, c'est-à-dire sous forme superfluide. La partie aval de la vanne constitue la zone chaude 60, dans laquelle l'hélium se présente sous forme gazeuse, c'est-à-dire à une température supérieure à 5 °K. Une zone intermédiaire 70 qui contient une certaine quantité d'hélium liquide à une température comprise entre 1,9 et 5 °K est représentée autour du siège d'étanchéité 20.

On observe que selon la solution de l'état de la technique, un apport de chaleur non négligeable s'effectue par conduction de la zone chaude vers la zone froide à travers la matière même du joint 10 et du siège d'étanchéité 20 de la vanne.

### Description d'une forme d'exécution préférée de l'invention

Le dispositif décrit à la figure 2 représente une forme d'exécution préférée de la présente invention. Les mêmes repères que ceux utilisés à la figure 1 ont été employés pour désigner les mêmes éléments.

La différence essentielle entre les deux formes d'exécution est la présence d'une zone de stagnation 80 de l'hélium liquide, qui permet qu'une certaine quantité de cet hélium liquide reste présente autour de la jonction joint 10 / siège d'étanchéité 20 et forme ainsi un écran, une barrière entre les zones dites chaude 60 et froide 50.

Cette zone de stagnation 80 se présente de manière particulièrement avantageuse sous la forme d'une gorge creusée dans le siège et qui se présente de ce fait sous la forme d'un anneau circulaire autour de la jonction joint 10 / siège d'étanchéité 20.

On observe de manière particulièrement avantageuse que l'apport de chaleur par conduction de la zone chaude vers la zone froide est réduit, voire supprimé.

## Revendications

1. Dispositif d'étanchéité pour vanne ou soupape à clapet à hélium superfluide, destiné à assurer l'étanchéité entre une zone froide (50) située en amont et une zone chaude (60) située en aval, comprenant un clapet (30), un joint (10) disposé sur ledit clapet (30), et un siège plan (20), **caractérisé en ce que** ledit dispositif comprend en outre une zone de stagnation (80), positionnée et conformée de façon telle qu'elle est capable de retenir une certaine quantité d'hélium liquide, quand la vanne est fermée.

2. Dispositif d'étanchéité selon la revendication 1, **caractérisé en ce que** ladite zone de stagnation (80) prend l'aspect d'une gorge creusée dans le siège et qui se présente sous la forme d'un anneau de préférence circulaire autour de la jonction joint (10)/siège plan (20).

3. Vanne ou soupape à clapet, **caractérisée en ce qu'**elle comprend un dispositif d'étanchéité selon la revendication 1 ou 2.

4. Utilisation du dispositif selon la revendication 1 ou 2 ou de la vanne selon la revendication 3 à des températures cryogéniques.
